# EUROPEAN PATENT APPLICATION

(11) **EP 4 696 522 A1**
(43) Date of publication of application: **18.02.2026**
(21) Application number: 25195184.4
(22) Date of filing: 11.08.2025
(51) Int. Cl.: B60C 1/00, C08L 7/00, C08L 9/00, C08L 47/00

(54) **RUBBER COMPOSITIONS MADE FROM SUSTAINABLE ELASTOMERS AND ARTICLES COMPRISING THE SAME**

(30) Priority: 16.08.2024 US 202418806822
(71) Applicant: The Goodyear Tire & Rubber Company, Akron, OH 44316 (US)
(72) Inventor: PAPAKONSTANTOPOULOS, George Jim, Medina, 44256 (US); NOYES, Kelsey Elisabeth, Akron, 44316 (US); KULIG, Joseph John, Tallmadge, 44278 (US)
(74) Representative: Kutsch, Bernd

(57) **Abstract**

A vulcanizable rubber composition is disclosed comprising a sustainable rubber polymer comprising at least one monomer comprising at least two double bonds and a filler material. The at least one monomer is selected from an acyclic monoterpene monomer or an acyclic terpenoid monomer. The acyclic monoterpene monomer or the acyclic terpenoid monomer has a 1,3-diene moiety or a vinyl functionality.

## Description

### Background

While providing favorable performance benefits, conventional synthetic polymers - as a supplement or alternative to natural rubber - are sourced from petroleum refinement and similar processes. Tire sidewall compounds, for example, are typically a blend of polybutadiene and natural rubber (polyisoprene). To make the polymer matrix exclusively from currently known sustainable polymer sources, one would either have to switch to a full natural rubber formulation or attempt to use sustainable polybutadiene sources. At the moment, both of these are extremely expensive and limited.

It would thus be desirable if another sustainable monomer could be found that was in abundant supply and that could be incorporated into blends as a homopolymer or copolymer with natural rubber. Such a sustainable elastomer and rubber compositions including the same would have the same glass transition temperature (T_{g}) and other physical properties as currently used rubber compositions, resulting in a polymer matrix for a sidewall formulations and other rubber article formulations from fully sustainable sources. An ideal monomer would have a natural source and would be in abundant supply and, when incorporated into polymers and copolymers, would produce rubber compositions and articles having properties comparable to current rubber materials. These needs and other needs are satisfied by the present invention.

### Summary of the Invention

The invention relates to a vulcanizable rubber composition in accordance with claim 1, to a vulcanized rubber composition in accordance with claim 13, and to an article in accordance with claim 14.

Dependent claims refer to preferred embodiments of the invention.

The invention, as embodied and broadly described herein, in one aspect, relates to a vulcanizable rubber composition comprising a sustainable rubber polymer comprising an acyclic monoterpene monomer or an acyclic terpenoid monomer comprising at least two double bonds and a filler material. In some preferred aspects, the acyclic monoterpene or terpenoid monomer is fully or partially hydrogenated. In another preferred aspect, the acyclic monoterpene monomer can be myrcene, ocimene, or allocimene, and the monoterpene can be present as a homopolymer or a copolymer with at least one other monomer. In a further preferred aspect, the composition can also include a second rubber compound. Also disclosed are vulcanized rubber compositions including the vulcanizable rubber compositions following performance of a vulcanization step and articles such as, for example, tires and tire components comprising the vulcanized rubber.

Other systems, methods, features, and advantages of the present invention will be or become apparent to one with skill in the art upon examination of the following detailed description. Individual features of the dependent claims, as well as all optional and preferred features and modifications of the described embodiments are combinable and interchangeable with one another.

### Detailed Description of Preferred Embodiments of the Invention

In this disclosure, any recited method can be carried out in the order of events recited or in any other order that is logically possible. That is, unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

### Definitions

As used in the specification and the appended claims, the singular forms "a," "an" and "the" include plural referents unless the context clearly dictates otherwise. Thus, for example, reference to "a monoterpenoid," "a filler," or "an elastomer," include, but are not limited to, mixtures or combinations of two or more such monoterpenoids, fillers, or elastomers, and the like.

It should be noted that ratios, concentrations, amounts, and other numerical data can be expressed herein in a range format. It will be further understood that the endpoints of each of the ranges are significant both in relation to the other endpoint, and independently of the other endpoint. As used herein, the terms "about," "approximate," "at or about," and "substantially" mean that the amount or value in question can be the exact value or a value that provides equivalent results or effects as recited in the claims or taught herein. That is, it is understood that amounts, sizes, formulations, parameters, and other quantities and characteristics are not and need not be exact but may be approximate and/or larger or smaller, as desired, reflecting tolerances, conversion factors, rounding off, measurement error and the like, and other factors known to those of skill in the art such that equivalent results or effects are obtained. In some circumstances, the value that provides equivalent results or effects cannot be reasonably determined. In such cases, it is generally understood, as used herein, that "about" and "at or about" mean the nominal value indicated ±10% variation unless otherwise indicated or inferred. In general, an amount, size, formulation, parameter or other quantity or characteristic is "about," "approximate," or "at or about" whether or not expressly stated to be such.

As used herein, a "monoterpene" is a member of a class of terpenes having two isoprene units and a molecular formula C₁₀H₁₆. Monoterpenes are naturally occurring, sourced from a variety of plants, and can be linear or can contain one or more rings. Suitable monoterpenes for use herein have at least two double bonds to enable participation in polymerization reactions.

As used herein, a "terpenoid" is a compound derived from isoprene or an oligomer thereof and containing at least one additional functional group such as, for example, a hydroxyl group or a keto group. Terpenoids are naturally occurring, sourced from a variety of plants, and can be linear or can contain one or more rings. In some aspects, a terpenoid can be semi-synthetic and can be produced by chemical modification of a monoterpene or other terpene. Terpenoids can be linear or can contain cycles and have at least two double bonds to enable participation in polymerization reactions.

"Sustainable" as used herein refers to a material, such as a rubber polymer, monomer useful in forming rubber polymers, or precursors of the same, that can be isolated from a natural resource, preferably a plant material, or that is isolated from a natural resource, preferably a plant material. A sustainable material is a renewable resource and can, in some aspects, be collected and used without causing an undue amount of environmental harm (as opposed to unsustainable materials such as petroleum derivatives). Sustainable materials are preferably biodegradable and are are preferably non-toxic to wildlife and plants if released into the environment through degradation of products such as, for example, tires, made with the materials. In many aspects, sustainable materials are also recyclable.

### Vulcanizable Rubber Compositions Including Sustainable Rubber Polymers

In one aspect, disclosed herein is a vulcanizable rubber composition including a sustainable rubber polymer, where the sustainable rubber polymer includes at least one monomer having at least two double bonds, where the at least one monomer is selected from an acyclic monoterpene monomer or an acyclic terpenoid monomer. In one aspect, the monomer includes a 1,3-diene moiety or a vinyl functionality. In another aspect, the vulcanizable rubber composition also includes a filler material, such as, for example, carbon black, silica, or a combination thereof. In some preferred aspects, the monomer can be fully or partially hydrogenated.

In a preferred aspect, when the monomer is an acyclic monoterpene monomer, the monomer can be myrcene, ocimene, allocimene, or any combination thereof. In some preferred aspects, the acyclic monoterpene monomer is not farnesene. In another aspect, when the monomer is an acyclic terpenoid monomer, the monomer can be myrcenol, ipsdienol, or any combination thereof.

In some preferred aspects, the monomer can be a homopolymer or can be a copolymer with at least one other monomer such as, for example, butadiene, where the butadiene is present in the copolymer in an amount of from 0.1% (w/w) to 75% (w/w), from 1% (w/w) to 65% (w/w), or from 10% (w/w) to 50% (w/w). In a preferred aspect, the myrcene and butadiene are present in the copolymer in a ratio of 3:1 myrcene monomers to butadiene monomers. In still another preferred aspect, the copolymer of myrcene and butadiene can have a number average molecular weight (Mₙ) of from 500 Da to 3,000,000 Da, from 1,000 Da to 2,000,000 Da, from 10,000 Da to 1,000,000 Da.

In a preferred aspect, the myrcene can be present as a copolymer with styrene, where the styrene is present in the copolymer in an amount of from 0.1% (w/w) to 40% (w/w), from 1% (w/w) to 35% (w/w), or from 10% (w/w) to 30% (w/w). In a preferred aspect, the myrcene and styrene are present in the copolymer in a ratio of 3:1 myrcene monomers to styrene monomers. In still another preferred aspect, the copolymer of myrcene and styrene can have a number average molecular weight (Mₙ) of from 500 Da to 3,000,000 Da, from 1,000 Da to 2,000,000 Da, or from 10,000 Da to 1,000,000 Da.

In still another preferred aspect, the myrcene or other acyclic monoterpene or terpenoid monomer can be a homopolymer. In a further preferred aspect, when the monomer is myrcene, the homopolymer can include 1,2-polymyrcene linkages, 1,4-polymyrcene linkages, 3,4-polymyrcene linkages, or any combination thereof. In another preferred aspect, the homopolymer can be polymerized using emulsion polymerization, anionic polymerization, or another polymerization method known in the art, and can be chain initiated or chain terminated with a functional chemistry capable of interacting with the at least one filler. In still another preferred aspect, the myrcene homopolymer can have a number average molecular weight (Mₙ) of from 500 Da to 3,000,000 Da, from 1,000 Da to 2,000,000 Da, or from 10,000 Da to 1,000,000 Da.

In a preferred aspect, in the vulcanizable rubber composition, the sustainable rubber polymer can be present at from 5 phr to 100 phr, or from 10 phr to 75 phr, or from 25 phr to 60 phr. In another preferred aspect, when the composition also includes a natural rubber, the natural rubber can be present at from 1 phr to 65 phr, or from 10 phr to 55 phr. In another aspect, when the composition also includes a polybutadiene rubber, the polybutadiene rubber can be present at from 1 phr to 65 phr, or from 10 phr to 55 phr. In another preferred aspect, when the composition also includes a styrene butadiene rubber, the styrene butadiene rubber can be present at from 1 phr to 90 phr, or from 10 phr to 75 phr, or from 25 phr to 60 phr.

### Further Components of the Rubber Compositions and Applications Thereof

The polymers described herein can be incorporated into rubber compositions including one or more rubber polymers. In one aspect, the rubber compound can include polymers composed of only the acyclic monoterpene monomer or acyclic terpenoid monomer or can include copolymers including the same. In another aspect, the rubber compositions disclosed herein can include a second rubber compound.

In a preferred aspect, the second rubber compound can be selected from natural rubber, polyisoprene, polybutadiene, styrene butadiene rubber (SBR), butyl rubber, chlorobutyl rubber, hydrogenated polyolefins, ethylene propylene diene monomer (EPDM) rubber; a fully or partially hydrogenated derivative thereof, or any combination thereof. In some preferred aspects, the second rubber compound can be or include a solution polymerized styrene-butadiene rubber (SBR). In one aspect, the solution polymerization prepared SBR (sSBR) can have a bound styrene content in the range of from 5 percent to 50 percent, or from 9 percent to 26 percent. In a further aspect, the sSBR can be conveniently prepared by organolithium catalysis in the presence of a hydrocarbon solvent. In another preferred aspect, the second rubber compound can be or include an emulsion polymerized SBR.

A reference to glass transition temperature, or T_{g}, of an elastomer or elastomer composition, when used herein, represents the glass transition temperature(s) of the respective elastomer or elastomer composition in its uncured state or, in the case of an elastomer composition, in some aspects, T_{g} can be measured in a cured state.

T_{g} is determined as a peak midpoint by a differential scanning calorimeter (DSC) using ASTM D7426 or equivalent.

In a preferred embodiment, the solution polymerized styrene-butadiene rubber has a glass transition temperature in a range of from -85 °C to 0 °C, or from -85 °C to -50 °C, or from -40 °C to 0 °C. In a further preferred aspect, the styrene butadiene rubber can include a blend of two or more styrene-butadiene rubber having different T_{g}. In a further preferred aspect, such a blend of styrene-butadiene rubbers can include functionalized SBRs, non-functionalized SBRs, or a combination of functionalized and non-functionalized styrene-butadiene rubbers.

In a preferred aspect, commonly employed silicas that can be used in the disclosed rubber compositions include conventional pyrogenic and precipitated silica. In one aspect, an untreated silica is useful herein. In a further aspect, the untreated silica can be a prewashed, wet filter cake of precipitated silica having hydroxyl groups thereon. In a further aspect, the precipitated silica can be derived from rice husk ash or bagasse (sugar cane) ash or the like and need not be dried following washing and filtration.

In some preferred aspects, the untreated silica is diluted in water (or other aqueous medium) to form an aqueous slurry. In one embodiment, the slurry can contain from 5-30 wt % silica, or at least 10 wt % silica, or another suitable dilution that is able to be pumped through a spray dryer. In any of these aspects, the pH of the slurry can be adjusted, e.g., to a pH of from 6 to 7. In one aspect, the silica can be present in an amount of from 1 phr to 155 phr, or from 5 phr to 125 phr, or from 50 phr to 100 phr.

In one aspect, a silica gel can be derived, for example, by hydrophobating a silica hydrogel with, for example, an organomercaptosilane and alkyl silane and drying the product. In some aspects, the temperature of the slurry is raised to (or maintained at) a temperature at which the coupling agent reacts with the hydrated surface of the silica, but which is below the boiling point of water, e.g., at least 20 °C, or at least 40 °C, or at least 60 °C, or up to 95° C, such as between 80 and 85 °C. In a further aspect, the silica coupling agent is allowed to react with the silica for a time which is sufficient to allow completion of the reaction. In some aspects, the slurry is then dried, e.g., by spray drying, at a temperature above the boiling point of water, such as at least 130 °C or at least 150 °C. In one aspect, the dried product can be in the form of substantially spherical beads, granules, or a powder.

In some preferred aspects, an organosilane coupling agent is incorporated into the disclosed compositions. In one aspect, the organosilane coupling agent used can include a first reactive moiety which includes a silicon atom and at least one hydrolyzable group, and a second reactive moiety capable of reaction with a double bond of a vulcanizable elastomer, the first and second reactive moieties being connected by a bridging unit comprising at least one of a polysulfide and a hydrocarbylene group. Further in this aspect, at least one of the hydrolyzable groups of the first reactive moiety can be selected from an alkoxy group and an aminoalkyl group. In some aspects, the coupling agent can be selected from bis(trialkoxysilylalkyl) polysulfides, bis(alkoxyaryloxysilylalkyl) polysulfides, bis(triaryloxysilylalkyl) polysulfides, and mixtures thereof.

In a preferred aspect, the pretreated silica material can have a CTAB surface area of at least 30 m²/g up to 300 m²/g, or up to 500 m²/g, as measured according to ASTM D6845-20. In one aspect, the untreated precipitated silica can have a pH of 6-8, resulting from residual sodium sulfate.

In a preferred aspect, the untreated silica can have a particle size of less than 10 micrometers (µm), or less than 5 µm, or at least 0.1 µm, as determined by ASTM C721-20. Silica primary particles for rubber usage are usually in the 10 to 100 nanometer range, 0.01 to 0.1 micrometers as measured by Differential Centrifugal Sedimentation (DCS).

Exemplary untreated precipitated silicas are available from PPG Industries as Hi-Sil^{™}, e.g., under the designations 210, 243, 315, EZ 160G-D, EZ 150G, 190G, 200G-D, HDP-320G, and 255CG-D; from Solvay as Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR; from Evonik as Ultrasil^{™}, under the designations VN2, VN3, VN3GR, 5000GR, 7000GR, 9000GR, as Zeopol^{™}, under the designations 8755LS and 8745; from Wuxi Quechen Silicon Chemical Co., Ltd. as Newsil^{™}, under the designations 115GR and 2000MP; from Maruo Calcium Co., Ltd., as Tokusil^{™} 315, and silicas derived from rice husk ash from Yihai Food and Oil Industry, China. Any precipitated silica can be used in the method. In other embodiments, the untreated precipitated silica is prepared as a wet filtered material shortly before use.

In one aspect, a silica coated carbon black and/or commonly employed carbon blacks can also be used as filler in an amount ranging from 1 phr to 100 phr. In another embodiment, from 20 to 80 phr of carbon black can be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N 762, N765, N774, N787, N907, N908, N990 and N991.

In another aspect, other fillers can be used in the rubber composition including, but not limited to, particulate fillers including ultra-high molecular weight polyethylene (UHMWPE), crosslinked particulate polymer gels and plasticized starch composite filler. In a further aspect, such other fillers can be used in an amount ranging from 1 phr to 30 phr.

In another aspect, the rubber composition can optionally include rubber processing oil. Further in this aspect, the rubber composition can include from 0 to 100 phr of processing oil. In a still further aspect, processing oil can be included in the rubber composition as extending oil typically used to extend elastomers. In another aspect, processing oil can also be included in the rubber composition by addition of the oil directly during rubber compounding. In yet another aspect, the processing oil used can include both extending oil present in the uncured rubber prior to processing, and process oil added during compounding. In one embodiment, the rubber composition includes a low PCA oil. Suitable low PCA oils include, but are not limited to, mild extraction solvates (MES), treated distillate aromatic extracts (TDAE), residual aromatic extract (RAE), SRAE, and heavy naphthenic oils as are known in the art. In a further aspect, suitable low PCA oils include those having a polycyclic aromatic content of less than 3 percent by weight as determined by the IP 346 method. Procedures for the IP 346 method can be found in Standard Methods for Analysis and Testing of Petroleum and Related Products and British Standard 2000 Parts, 2003, 62nd edition, published by the Institute of Petroleum, United Kingdom.

In a preferred aspect, suitable TDAE oils are available as Tudalen^{®} SX500 from Klaus Dahleke K G, VivaTec^{®} 400 and VivaTec^{®} 500 from H&R Group, Enerthene^{®} 1849 from BP, and Extensoil^{®} 1996 from Repsol. In a further aspect, the oils may be available as the oil alone or can be provided along with an elastomer in the form of an extended elastomer. In another aspect, suitable vegetable oils include, but are not limited to, soybean oil, sunflower oil, and canola oil, which can be provided in the form of esters containing a certain degree of unsaturation.

In one aspect, a rubber composition including the disclosed sustainable monomers and polymers could be compounded by methods generally known in the rubber compounding art, such as mixing various sulfur-vulcanizable constituent rubbers with variously commonly used additive materials such as, for example, curing aids, such as sulfur activators, retarders and accelerators, processing additives such as oils, resins including tackifying, traction, and thermoplastic resins and plasticizers, fillers, pigments, fatty acid, zinc acid, waxes, antioxidants and antiozonants (anti-degradants), peptizing agents, and reinforcing materials. In an aspect, depending on the intended use of the sulfur vulcanizable and sulfur vulcanized material (rubbers), the additives mentioned above are selected and commonly used in conventional amounts.

Representative examples of sulfur donors include elemental sulfur (free sulfur), an amine disulfide, polymeric polysulfide, and sulfur olefin adducts. In one aspect, the sulfur-vulcanizing agent is elemental sulfur. In another aspect, the sulfur-vulcanizing agent can be used in an amount ranging from 0.5 phr to 8 phr, or from 1.5 phr to 6 phr. Typical amounts of resins can be added in a range of from 0 phr to 100 phr. Typical amounts of processing aids can be added in an amount of from 1 phr to 50 phr. Typical amounts of antioxidants can be from 1 phr to 5 phr. In an aspect, representative antioxidants include, but are not limited to, diphenyl-p-phenylenediamine. Typical amounts of antiozonants can be from 1 phr to 5 phr. Typical amounts of fatty acids can include stearic acid and can be present in an amount of from 0.5 phr to 8 phr.

In one aspect, typical amounts of zinc oxide can be from 0.5 phr to 10 phr. Typical amounts of waxes can be from 1 phr to 5 phr. In an aspect, microcrystalline waxes can be used. Typical amounts of peptizers can be from 0.1 phr to 1 phr. In one aspect, a typical peptizer can be, for example, dibenzamidodiphenyl disulfide.

In one aspect, accelerators can be used to control the time and/or temperature required for vulcanization and to improve the properties of the vulcanizate. In one embodiment, a single accelerator system can be used, i.e., a primary accelerator. In another embodiment, the primary accelerator(s) can be used in total amounts ranging from 0.5 phr to 4 phr, or from 0.8 phr to 1.5, phr. In another embodiment, combinations of a primary and a secondary accelerator can be used, with the secondary accelerator being used in smaller amounts, such as from 0.05 phr to 3 phr, in order to activate and to improve the properties of the vulcanizate. In an aspect, combinations of these accelerators might be expected to produce a synergistic effect on the final properties of the cured rubber and may be somewhat better than those produced by use of either accelerator alone.

In an additional aspect, delayed action accelerators can be used; these are not affected by normal processing temperatures but produce a satisfactory cure at ordinary vulcanization temperatures. In some aspects, vulcanization retarders can also be used. Suitable types of accelerators that can be used in the present invention are amines, disulfides, guanidines, thioureas, thiazoles, thiurams, sulfonamides, dithiocarbamates, and xanthates. In one embodiment, the primary accelerator is a sulfonamide. If a second accelerator is used, the secondary accelerator can be a guanidine, dithiocarbamate, or thiuram compound. In another aspect, other curatives can be used, including, but not limited to, from 0.5 phr to 5 phr of 1,6-bis(N,N' dibenzylthio-carbamoyldithio)-hexane, which is available as Vulcuren from Lanxess.

In one aspect, the cured or vulcanized rubber composition that includes the sustainable monomers and polymers disclosed herein can be incorporated in a variety of rubber articles, including, for example, tires, tire components, shoes, shoe components, transmission belts, hoses, air springs, conveyor belts, track belts, vibration isolators, among others. In an aspect, the tire can be pneumatic or non-pneumatic. In one aspect, the tire component can be a tire tread such including at least one of tread cap and/or tread base rubber layer tire sidewall, tire carcass component, such as, for example, a carcass cord ply coat, tire sidewall stiffening insert, an apex adjacent to or spaced apart from a tire bead, wire coat, inner liner tire chafer and/or tire bead component. In a further aspect, the tread and/or tires can be built, shaped, molded and cured by various methods which will be readily apparent to those skilled in the art. In an alternative aspect, the cured or vulcanized rubber composition can be present in the sidewall or casing of the tire.

In one aspect, a pneumatic tire as disclosed herein can be a race tire, passenger tire, aircraft tire, agricultural, earth-mover, off-the-road, or truck tire. In one embodiment, the tire is a passenger or truck tire. In another embodiment, the tire can also be a radial or bias. In one embodiment, the tire component is intended to be ground-contacting. In another embodiment, the tire component is not ground contacting. In other embodiments, the rubber compound can be incorporated in a non-pneumatic tire.

In yet another aspect, the mixing of the rubber composition can be accomplished by methods known to those having skill in the rubber mixing art. For example, the ingredients are typically mixed in at least two stages, namely, at least one non-productive stage followed by a productive mix stage. Further in this aspect, the final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). In another aspect, the rubber composition can be subjected to a thermomechanical mixing step. Further in this aspect, the thermomechanical mixing step generally includes a mechanical working in a mixer or extruder for a period of time suitable in order to produce a rubber temperature between 140 °C and 190° C. The appropriate duration of the thermomechanical working varies as a function of the operating conditions, and the volume and nature of the components. In one example, the thermomechanical working can be from 1 minute to 20 minutes.

In still another aspect, after mixing, the compounded rubber can be fabricated by a method such as, for example, by extrusion through a suitable die to form a tire tread (including tread cap and tread base). In a further aspect, the tire tread is typically built onto a sulfur curable tire carcass and the assembly thereof cured in a suitable mold under conditions of elevated temperature and pressure by methods well-known to those having skill in the art.

Now having described the aspects of the present invention, in general, the following Examples describe some additional aspects of the present invention. While aspects of the present invention are described in connection with the following examples and the corresponding text and figures, there is no intent to limit aspects of the present invention to this description. On the contrary, the intent is to cover all alternatives, modifications, and equivalents included within the spirit and scope of the present invention.

### Examples

The following examples are put forth so as to provide those of ordinary skill in the art with a complete invention and description of how the compounds, compositions, articles, devices and/or methods claimed herein are made and evaluated and are intended to be purely exemplary of the invention and are not intended to limit the scope of what the inventors regard as their invention. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric.

### Example 1: Exemplary Sustainable Rubber Compositions and Properties Thereof

A first set of exemplary rubber compositions was prepared using an emulsion polymerized homomyrcene, carbon black filler, and additional components as described in Table 1:

| **Table 1: Exemplary Rubber Compositions with Carbon Black^{a}** | | | | |
|---|---|---|---|---|
| | **CB1** | **CB2** | **CB3** | **CB4** |
| **First Stage** | | | | |
| Emulsion Polymyrcene | 50.00 | | 35.00 | |
| Natural Rubber | | 50.00 | | 35.00 |
| Carbon Black | 51.00 | 51.00 | 51.00 | 51.00 |
| Processing Oil | 15.00 | 15.00 | 15.00 | 15.00 |
| ZnO | 2.00 | 2.00 | 2.00 | 2.00 |
| Stearic Acid | 2.00 | 2.00 | 3.00 | 3.00 |
| Waxes | 1.50 | 1.50 | 1.50 | 1.50 |
| 6PPD (*N*-(1,3-dimethylbutyl)-*N'*-phenyl-1,4-benzenediamine) | 3.00 | 3.00 | 3.00 | 3.00 |
| Polybutadiene | 50.00 | 50.00 | 65.00 | 65.00 |

| **Productive Stage** | | | | |
|---|---|---|---|---|
| Sulfur | 1.25 | 1.25 | 1.25 | 1.25 |
| Delayed Action Sulfenamide Accelerator | 0.50 | 0.50 | 0.50 | 0.50 |
| Diphenyl Guanidine | 0.10 | 0.10 | 0.10 | 0.10 |
| Antioxidant/Antiozonant | 1.00 | 1.00 | 1.00 | 1.00 |
| Vulcanizing Agent | 0.85 | 0.85 | 0.85 | 0.85 |
| ^{a}Amounts of components given in phr (parts per hundred rubber). | | | | |

The emulsion homomyrcene had a number average molecular weight of 390,600 Da and a T_{g} of -69.2 °C. The polybutadiene was BUDENE^{®} 1207 (Goodyear Chemical, Akron, OH). The delayed action sulfenamide accelerator was WESTCO^{™} CBS Accelerator (N-cyclohexyl-2-benzothiazole sulfenamide; Western Reserve Chemicals, Akron, OH). The productive stage antioxidant/antiozonant wasPOLYSTAY^{®} 100 (Goodyear Chemical, Akron, OH). The vulcanizing agent was CRYSTEX^{™} HS OT 20 (Eastman Chemical Company, Kingsport, TN).

Selected properties of the exemplary rubber compositions are provided in Table 2:

| **Table 2: Properties of Exemplary Rubber Compositions with Carbon Black** | | | | |
|---|---|---|---|---|
| | **CB1** | **CB2** | **CB3** | **CB4** |
| G' at 0.833 Hz (kPa) | 59.8 | 138.4 | 79.0 | 154.2 |
| Delta Torque (dNm) | 8.9 | 9.4 | 10.4 | 10.4 |
| T25 (min) | 8.3 | 5.0 | 9.4 | 5.6 |
| T90 (min) | 22.2 | 11.4 | 21.7 | 13.3 |
| G' at 1.0%, 60 °C, 1Hz (kPa) | 1194 | 1068 | 1241 | 1285 |
| G' at 3.0%, 60 °C, 1Hz (kPa) | 1003 | 956 | 1079 | 1157 |
| G' at 5.0%, 60 °C, 1Hz (kPa) | 919.6 | 904.4 | 1007 | 1098 |
| Tan δ at 1.0%, 60 °C, 1Hz | 0.141 | 0.109 | 0.13 | 0.111 |
| Tan δ at 3.0%, 60 °C, 1Hz | 0.153 | 0.121 | 0.141 | 0.121 |
| Tan δ at 5.0%, 60 °C, 1Hz | 0.152 | 0.121 | 0.14 | 0.122 |

Rubber process analyzer (RPA) testing was conducted using ASTM D7605. The uncured data shown is the G' (storage or elastic modulus) at 100 °C and 15% angle. The tan δ is the loss modulus G" divided by the storage modulus G' and is a measurement of the hysteresis of the rubber compound, where hysteresis is an indicator of the compound rolling resistance or the fuel economy of a tire containing the composition. The sample with the emulsion polymyrcene has a higher tan δ value than either control composition, which was attributed to the longer cure times (T90). A cure package adjustment was found necessary. Rheological property data was collected using a moving die rheometer at 150 °C according to ASTM D5289.

A second set of exemplary rubber compositions was prepared using an emulsion polymerized homomyrcene, carbon black filler, and additional components as described in Table 3 accounting for the identified cure adjustments from the previous example:

| **Table 3: Exemplary Adjusted Rubber Compositions with Carbon Black^{a}** | | | | |
|---|---|---|---|---|
| | **CB-ADJ-1** | **CB-ADJ-2** | **CB-ADJ-3** | **CB-ADJ-4** |
| **First Stage** | | | | |
| Emulsion Polymyrcene | 50.00 | | 35.00 | |
| Natural Rubber | | 50.00 | | 35.00 |
| Carbon Black | 51.00 | 51.00 | 51.00 | 51.00 |
| Processing Oil | 15.00 | 15.00 | 15.00 | 15.00 |
| ZnO | 2.00 | 2.00 | 2.00 | 2.00 |
| Stearic Acid | 2.00 | 2.00 | 3.00 | 3.00 |
| Waxes | 1.50 | 1.50 | 1.50 | 1.50 |
| 6PPD | 3.00 | 3.00 | 3.00 | 3.00 |
| Polybutadiene | 50.00 | 50.00 | 65.00 | 65.00 |

| **Productive Stage** | | | | |
|---|---|---|---|---|
| Sulfur | 1.25 | 1.25 | 1.25 | 1.25 |
| Delayed Action Sulfenamide Accelerator | 0.60 | 0.50 | 0.50 | 0.50 |
| Diphenyl Guanidine | 0.60 | 0.10 | 0.60 | 0.10 |
| Antioxidant/Antiozonant | 1.00 | 1.00 | 1.00 | 1.00 |
| Vulcanizing Agent | 1.02 | 0.85 | 0.85 | 0.85 |
| ^{a}Amounts of components given in phr (parts per hundred rubber). | | | | |

The emulsion homomyrcene had a number average molecular weight of 390,600 Da and a glass transition temperature (T_{g}) of -69.2 °C. Commercial compounds and products useful for preparation of the second set of exemplary rubber compositions are described above. Selected properties of the second set of exemplary rubber compositions are provided in Table 4:

| **Table 4: Properties of Exemplary Adjusted Rubber Compositions with Carbon Black** | | | | |
|---|---|---|---|---|
| | **CB-ADJ-1** | **CB-ADJ-2** | **CB-ADJ-3** | **CB-ADJ-4** |
| G' at 0.833 Hz (kPa) | 56.9 | 135.1 | 77.2 | 144.8 |
| Delta Torque (dNm) | 11.9 | 9.3 | 11.7 | 10.4 |
| T25 (min) | 6.8 | 5.1 | 8.3 | 5.5 |
| T90 (min) | 13.4 | 11.6 | 16.3 | 13.3 |
| G' at 1.000% (kPa) | 1402 | 1060 | 1340 | 1243 |
| G' at 3.000% (kPa) | 1196 | 949 | 1180 | 1125 |
| G' at 5.000% (kPa) | 1107 | 895 | 1107 | 1070 |
| Tan δ at 1.000% | 0.115 | 0.112 | 0.112 | 0.112 |
| Tan δ at 3.000% | 0.125 | 0.122 | 0.121 | 0.12 |
| Tan δ at 5.000% | 0.121 | 0.123 | 0.12 | 0.122 |

The samples with the emulsion polymyrcene have higher cured stiffness than either control composition, indicating a higher resistance to deformation at equal tan δ for the same strains while the cure characteristics (T25/90) are equivalent for all samples after the cure adjustment.

Exemplary rubber compositions were prepared using an anionic polymerized homomyrcene, carbon black filler, and additional components as described in Table 5:

| **Table 5: Exemplary Anionically Polymerized Rubber Compositions with Carbon Black^{a}** | | |
|---|---|---|
| | **CB-AN-1** | **CB-AN-2** |
| **First Stage** | | |
| Emulsion SBR | | 50.00 |
| Anionic Polymyrcene | 50.00 | |
| Carbon Black | 51.00 | 51.00 |
| Processing Oil | 15.00 | 15.00 |
| ZnO | 2.00 | 2.00 |
| Stearic Acid | 3.00 | 3.00 |
| Waxes | 1.50 | 1.50 |
| 6PPD | 3.00 | 3.00 |
| Polybutadiene | 50.00 | 50.00 |

| **Productive Stage** | | |
|---|---|---|
| Sulfur | 1.00 | 1.00 |
| Delayed Action Sulfenamide Accelerator | 2.40 | 2.40 |
| Antioxidant/Antiozonant | 1.00 | 1.00 |
| ^{a}Amounts of components given in phr (parts per hundred rubber). | | |

The anionic homomyrcene had a number average molecular weight of 192,500 Da, a polydispersity index of 1.034, and a T_{g} of -64.01 °C. Commercial compounds and products useful for preparation of this set of exemplary rubber compositions are described above. The emulsion polymerized ESBR was PLIOFLEX^{®} ESBR (Goodyear Chemical, Akron, OH). Selected properties of this set of exemplary rubber compositions are provided in Table 6:

| **Table 6: Properties of Exemplary Anionically Polymerized Rubber Compositions with Carbon Black** | | |
|---|---|---|
| | **CB-AN-1** | **CB-AN-2** |
| Delta Torque (dNm) | 11.3 | 12.8 |
| T25 (min) | 5.0 | 6.0 |
| T90 (min) | 8.3 | 11.7 |
| G' at 1.000% (kPa) | 1803 | 1972 |
| G' at 3.000% (kPa) | 1388 | 1604 |
| G' at 5.000% (kPa) | 1211 | 1444 |
| G' at 7.500% (kPa) | 1091 | 1329 |
| G' at 10.000% (kPa) | 1011 | 1251 |
| Tan δ at 1.000% | 0.134 | 0.156 |
| Tan δ at 3.000% | 0.162 | 0.178 |
| Tan δ at 5.000% | 0.167 | 0.18 |
| Tan δ at 7.500% | 0.165 | 0.178 |
| Tan δ at 10.000% | 0.162 | 0.178 |

Exemplary rubber compositions were prepared using an emulsion polymerized homomyrcene, silica filler, and additional components as described in Tables 7 and 8:

| **Table 7: Polymer Properties** | | |
|---|---|---|
| **Polymer** | **Molecular Weight (from Gel Permeation Chromatography, in Da)** | **T_{g} (°C)** |
| Homomyrcene | Mₙ 2,040,000 | -62 |
| | M_{w} 3,770,000 | |
| Butadiene-co-myrcene (1:3) | Mₙ 843,000 | -68 |
| | M_{w} 3,213,000 | |
| Myrcene-co-styrene (3:1) | Mₙ 1,780,000 | -41 and -24 |

| **Table 8: Exemplary Rubber Compositions with Silica^{a}** | | | | | | | | |
|---|---|---|---|---|---|---|---|---|
| | **S1** | **S2** | **S3** | **S4** | **S5** | **S6** | **S7** | **S8** |
| **First Stage** | | | | | | | | |
| Homomyrcene | 50.00 | | | | | | 100.00 | |
| Butadiene-co-myrcene (25:75) | | 50.00 | | | | | | |
| Myrcene-co-styrene (75:25) | | | 50.00 | | | | | |
| Emulsion SBR | | | | 100.00 | | | | |
| Solution SBR A | | | | | 100.00 | | | |
| Natural Rubber | 50.00 | 50.00 | 50.00 | | | 100.00 | | |
| Solution SBR B | | | | | | | | 100.00 |
| ZnO | 2.00 | 2.00 | 2.00 | 2.00 | 2.00 | 2.00 | 2.00 | 2.00 |
| Stearic Acid | 3.00 | 3.00 | 3.00 | 3.00 | 3.00 | 3.00 | 3.00 | 3.00 |
| Processing Oil | 20.00 | 20.00 | 20.00 | 20.00 | 20.00 | 20.00 | 20.00 | 20.00 |
| Carbon Black | 5.00 | 5.00 | 5.00 | 5.00 | 5.00 | 5.00 | 5.00 | 5.00 |
| 6PPD | 3.00 | 3.00 | 3.00 | 3.00 | 3.00 | 3.00 | 3.00 | 3.00 |
| Precipitated Amorphous Silica | 70.00 | 70.00 | 70.00 | 70.00 | 70.00 | 70.00 | 70.00 | 70.00 |
| Sulfur Containing Organosilane | 7.00 | 7.00 | 7.00 | 7.00 | 7.00 | 7.00 | 7.00 | 7.00 |

| **Productive Stage** | | | | | | | | |
|---|---|---|---|---|---|---|---|---|
| Sulfur | 1.40 | 1.40 | 1.40 | 1.40 | 1.40 | 1.40 | 1.40 | 1.40 |
| Delayed Action Sulfenamide Accelerator | 2.40 | 2.40 | 2.40 | 2.40 | 2.40 | 2.40 | 2.40 | 2.40 |
| Diphenyl Guanidine | 2.00 | 2.00 | 2.00 | 2.00 | 2.00 | 2.00 | 2.00 | 2.00 |
| ^{a}Amounts of components given in phr (parts per hundred rubber). | | | | | | | | |

Commercial compounds and products useful for preparation of the exemplary rubber compositions are described above. The solution polymerized SBR was SLF^{®} 16S42 (Goodyear Chemical, Akron OH) or SPRINTAN^{™} SLR 4602 (Trinseo, Wayne, PA). The carbon black was N330 carbon black. The silica filler was ZEOSILO 1165MP (Solvay, Brussels, Belgium). The sulfur containing organisilanes was Si 266^{®} (Evonik Corporation, Essen, Germany). Selected properties of this set of exemplary rubber compositions are provided in Table 9:

| **Table 9: Properties of Exemplary Rubber Compositions with Silica** | | | | | | | | |
|---|---|---|---|---|---|---|---|---|
| | **S1** | **S2** | **S3** | **S4** | **S5** | **S6** | **S7** | **S8** |
| Delta Torque (dNm) | 12.8 | 12.3 | 12.7 | 12.4 | 14.4 | 12.4 | 12.7 | 11.6 |
| T25 (min) | 2.2 | 2.2 | 2.3 | 2.9 | 3.2 | 1.9 | 2.4 | 3.2 |
| T90 (min) | 5.9 | 5.7 | 6.3 | 6.3 | 7.3 | 4.0 | 6.9 | 7.3 |
| G' at 1.000% (kPa) | 41801 | 3524 | 4168 | 4063 | 4494 | 3833 | 5007 | 3114 |
| G' at 3.000% (kPa) | 3349 | 2913 | 3352 | 3296 | 3677 | 3089 | 4092 | 2649 |
| G' at 5.000% (kPa) | 2946 | 2598 | 2956 | 2859 | 3255 | 2710 | 3640 | 2420 |
| Tan δ at 1.000% | 0.115 | 0.104 | 0.121 | 0.167 | 0.126 | 0.110 | 0.100 | 0.110 |
| Tan δ at 3.000% | 0.121 | 0.111 | 0.126 | 0.175 | 0.136 | 0.119 | 0.110 | 0.117 |
| Tan δ at 5.000% | 0.122 | 0.113 | 0.126 | 0.192 | 0.139 | 0.121 | 0.126 | 0.116 |

It should be emphasized that the above-described embodiments of the present invention are merely possible examples of implementations set forth for a clear understanding of the principles of the invention.

## Claims

1. A vulcanizable rubber composition comprising a sustainable rubber polymer comprising at least one monomer comprising at least two double bonds, wherein the at least one monomer is selected from an acyclic monoterpene monomer or an acyclic terpenoid monomer, and a filler material, and wherein the acyclic monoterpene monomer or the acyclic terpenoid monomer has a 1,3-diene moiety or a vinyl functionality.

2. The vulcanizable rubber composition of claim 1, wherein the sustainable rubber polymer comprising an acyclic monoterpene monomer or an acyclic terpenoid monomer is fully or partially hydrogenated.

3. The vulcanizable rubber composition of claim 1 or 2, wherein the acyclic monoterpene monomer comprises myrcene, ocimene, allocimene or any combination thereof, and, optionally, wherein the myrcene, when used, comprises a homopolymer or a copolymer with at least one other monomer that has preferably been polymerized using emulsion polymerization or anionic polymerization.

4. The vulcanizable rubber composition of at least one of the previous claims, further comprising a second rubber compound.

5. The vulcanizable rubber composition of claim 4, wherein the second rubber compound comprises natural rubber, polyisoprene, polybutadiene, styrene butadiene rubber (SBR), butyl rubber, chlorobutyl rubber, hydrogenated polyolefins, ethylene propylene diene monomer (EPDM) rubber; a fully or partially hydrogenated derivative thereof, or any combination thereof.

6. The vulcanizable rubber composition of at least one of the previous claims, wherein the acyclic terpenoid monomer comprises myrcenol, ipsdienol, or any combination thereof.

7. The vulcanizable rubber composition of at least one of the previous claims, wherein the SBR comprises solution polymerized SBR, emulsion polymerized SBR, or any combination thereof.

8. The vulcanizable rubber composition of at least one of the previous claims, wherein the sustainable rubber polymer is present at from 5 phr to 100 phr or from 30 to 70 phr.

9. The vulcanizable rubber composition of at least one of the previous claims, wherein the second rubber compound is present at from 1 phr to 90 phr or from 20 to 60 phr.

10. The vulcanizable rubber composition of at least one of the previous claims, wherein the filler material comprises carbon black, silica, or any combination thereof.

11. The vulcanizable rubber composition of at least one of the previous claims, wherein the myrcene is a copolymer with butadiene, and, preferably wherein the butadiene is present in the copolymer in an amount of from 0.1% (w/w) to 75% (w/w).

12. The vulcanizable rubber composition of at least one of the previous claims, wherein the myrcene is a copolymer with styrene, and, preferably, wherein the styrene monomer is present in the copolymer in an amount of from 0.1% (w/w) to 40% (w/w).

13. A vulcanized rubber composition comprising the vulcanizable rubber composition of at least one of the previous claims following performance of a vulcanization step.

14. An article comprising the vulcanized rubber composition of claim 13.

15. The article of claim 14, wherein the article is or comprises a tire, a tire component, a shoe, a shoe component, a transmission belt, a hose, an air spring, a conveyor belt, a track belt, a vibration isolator, or any combination thereof, and, preferably, when the article is a tire, the vulcanized rubber composition is present in the sidewall, the casing, or the tread of the tire, or any combination thereof.
